Europäisches Patentamt

**European Patent Office**

Office européen des brevets

(19)

(11) Numéro de publication: **0 079 656**
**B1**

(12)

# FASCICULE DE BREVET EUROPEEN

(45) Date de publication du fascicule du brevet
**11.09.85**

(51) Int. Cl.⁴. **B 29 C 47/10**

(21) Numéro de dépôt: **82201429.6**

(22) Date de dépôt: **11.11.82**

---

(54) **Extrudeuse pour matière plastique.**

---

(30) Priorité: **17.11.81 CH 7385/81**

(43) Date de publication de la demande:
**25.05.83 Bulletin 83/21**

(45) Mention de la délivrance du brevet:
**11.09.85 Bulletin 85/37**

(84) Etats contractants désignés:
**CH DE FR GB IT LI SE**

(56) Documents cités:
**DE - C - 880 935**
**FR - A - 1 377 457**

(73) Titulaire: **Maillefer S.A., Route du Bois,
CH-1024 Ecublens Canton de Vaud (CH)**

(72) Inventeur: **Maillefer, Charles, Au Village,
CH-1164 Buchillon (CH)**

(74) Mandataire: **Rochat, Daniel Jean et al, Bovard AG
Patentanwälte VSP Optingenstrasse 16,
CH-3000 Bern 25 (CH)**

**Description**

La présente invention a pour objet une extrudeuse pour matière plastique, comprenant une vis avec un noyau s'étendant sur toute la longueur de la vis et avec un filetage solidaire du noyau et s'étendant en saillie de ce dernier jusqu'à un diamètre prédéterminé, un cylindre disposé horizontalement, dans lequel la vis est engagée et qui présente sur une partie de sa longueur un passage cylindrique de dimensions ajustées avec un jeu prédéterminé au diamètre du filetage, une trémie placée au dessus du cylindre à son extrémité amont, une ouverture étant prévue à la base de cette trémie pour permettre le passage de la matière plastique en particules de la trémie dans le cylindre, et une chambre d'alimentation entourant une partie amont de la vis et mettant en communication le dit passage cylindrique avec la trémie.

On sait que les extrudeuses sont des machines essentiellement destinées à travailler la matière plastique pour l'amener dans un état lui permettant d'être mise en forme par passage à travers un outillage d'extrusion ou par refoulement dans un moule. Elles se distinguent donc des machines qui sont conçues pour effectuer des opérations de pétrissage. Des machines de ces derniers types sont décrites par exemple dans les fascicules du brevet allemand DE-C-880 935 et de la demande publiée DE-A-2 024 596.

Selon ces documents, la trémie communique avec l'enveloppe d'une zone amont de la machine, qui comporte dans un cas un agencement d'aubes de grandes dimensions, solidaires de la partie amont de la vis et dans l'autre cas un piston solidaire de la vis, celle-ci étant mobile non seulement en rotation mais également dans le sens axial de manière à comprimer la matière plastique en provenance de la trémie, contre la paroi amont de l'entrée du cylindre.

Dans les extrudeuses à vis du genre mentionné au début, le cylindre présente en général à son extrémité amont une ouverture de forme rectangulaire, carrée ou ronde ou un raccord tubulaire vertical, et la trémie, généralement une pièce de tôle, est fixée dans cette ouverture ou ce raccord. Dans certain cas, l'ouverture d'alimentation est décalée latéralement par rapport à un plan vertical contenant l'axe de la vis ou bien on prévoit dans le cylindre une volute en forme de spirale destinée à guider la masse des particules de matière plastique qui est progressivement entraînée par la vis dans l'alésage du cylindre.

La fig. 1 du brevet CH-A-612 375 montre par exemple que les dimensions internes du cylindre dans la zone de raccordement à la trémie sont du même ordre que celles de l'alésage du cylindre.

Du fait de la forme asymétrique de l'espace à partir duquel les granules ou la poudre de la matière plastique à l'état initial, sont entraînés dans le cylindre, la vis est soumise à une poussée latérale qui, dans bien des cas, ne peut pas être absorbée par le ou les paliers, de sorte que les filets de la vis appuient à certains endroits contre la surface interne du cylindre. Cela conduit à une usure progressive des pièces et par conséquent à une variation des jeux existant entre la partie mobile et la partie fixe de l'extrudeuse.

Pour remédier à ce défaut, une extrudeuse connue par le brevet français FR-A-1 377 457 comporte dans sa partie amont située sous la trémie deux éléments de cylindre qui sont mobiles latéralement par rapport à la partie amont de la vis. Une fois que la matière contenue dans la trémie a pénétré entre ces parties du cylindre celles-ci sont déplacées l'une vers l'autre en comprimant la charge de matière plastique contre le noyau de la vis, entre les spires de son filet. Le fonctionnement de cette extrudeuse est donc essentiellement discontinu.

Dans les extrudeuses usuelles, à fonctionnement continu, les dimensions restreintes des ouvertures d'alimentation font apparaître un autre phénomène très gênant: Le débit de l'extrudeuse présente des irrégularités dans le temps, qu'on nomme pulsations. A chaque tour de vis, le débit varie si bien que le produit extrudé présente des vagues longitudinales. Or, aujour'hui, dans bien des cas, une grande précision est demandée, ce qui rend les extrudeuses ordinaires impropres.

Les pulsations du débit proviennent du filet de la vis passant à proximité des parois, notamment du fond de l'ouverture d'alimentation. En effet, la masse de granulés prise entre le noyau de la vis, le filet de la vis et le fond de l'ouverture d'alimentation est poussée vers l'aval dans le cylindre. Lorsqu'au contraire, le filet de la vis se trouve dans le haut de l'ouverture d'alimentation, il déplace une masse de granulés libre de se mouvoir dans n'importe quelle direction. Des capteurs de pression montés le long du cylindre montrent des variations périodiques avec la rotation de la vis.

Le but de la présente invention est de créer un agencement d'une extrudeuse à vis du genre mentionné au début, qui permette une production continue et absolument régulière de matière plastique homogénéisée en évitant les défauts mentionnés ci-dessus.

Pour cela, l'extrudeuse selon l'invention est caractérisée en ce que, l'extrudeuse étant destinée à fonctionner en continu, la chambre d'alimentation est limitée par des parois fixes dont les faces internes comportent deux faces transversales opposées planes et verticales, de même surface, et entre ces deux faces transversales, des faces longitudinales prallèles à l'axe de la vis, disposées symétriquement par rapport à un plan vertical contenant l'axe de la vis, et s'étendant à une distance du dit axe qui en tout point surpasse le rayon du filetage d'une valeur supérieure à la dimension des particules les dites particules étant ainsi entraînés par le filetage au cours du mouvement de rotation de la vis dans des conditions indépendantes de leur position angulaire autour de la vis.

Dans cette disposition, les granulés sont poussés vers l'aval dans des conditions telles que, mises à part les forces de gravitation qui sont ici négligeables, la position du filet de la vis ne joue pas de rôle. On a ainsi une poussée régulière des granulés vers l'aval, quelle que soit la position angulaire de la vis.

On va décrire ci-après, à titre d'exemple, une forme d'exécution de l'extrudeuse selon l'invention dont la partie amont est représentée, au dessin annexé.

À la fig. 1 en coupe longitudinale, et
à la fig. 2 en coupe transversale.

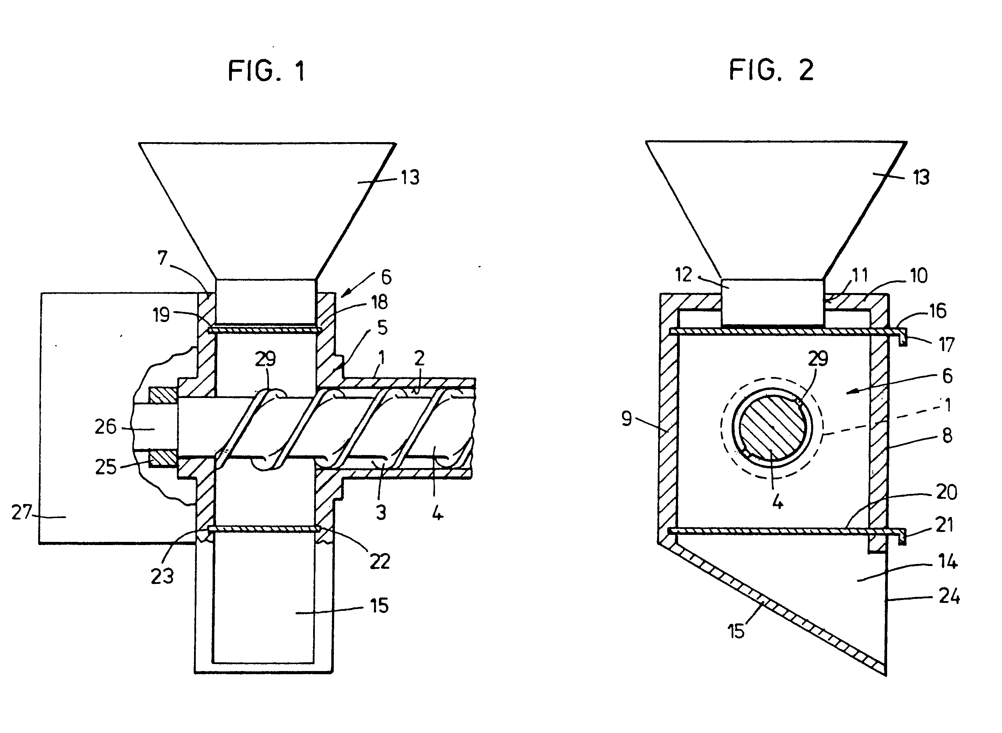

L'extrudeuse comporte un cylindre 1 dans lequel tourne une vis 4, formée d'un noyau dont fait saillie un filet 3 qui dans la forme d'exécution décrite ici est un filet unique à pas constant. Cependant, il est bien entendu que la vis pourrait ainsi présenter n'importe quelle disposition avec filet simple ou multiple, de pas constant ou variable, le sommet 29 du ou des filets délimitant une surface cylindrique imaginaire, dont le diamètre est inférieur à celui de la face interne lisse et cylindrique 2 du cylindre, de sorte qu'il existe un ou des jeux d'épaisseur prédéterminée entre le ou les filets de la vis et la face interne 2 du cylindre 1. A l'amont, le cylindre 1 se termine par une paroi plane 5 perpendiculaire à l'axe commun de la vis 4 et du cylindre 1. Cette paroi 5 forme la paroi aval d'une chambre d'alimentation désignée de façon générale par 6 et limitée du côté amont par une seconde paroi plane 7 parallèle à la paroi 5. Dans le sens latéral, comme on le voit à la fig. 2, la chambre d'alimentation 6 est limitée par deux parois verticales 8 et 9 planes et parallèles à l'axe commun de la vis 4 et du cylindre 1, tandis qu'une paroi supérieure 10 comporte une ouverture 11 dans laquelle est engagée la partie inférieure 12 d'une trémie 13 de construction usuelle qui peut être de forme pyramidale ou cônique et constituée en tôle soudée. A sa partie inférieure, la chambre d'alimentation 6 communique avec un puits d'évacuation 14 limité par un fond oblique 15 et par les prolongements inférieurs des parois 5 et 7.

Un premier obturateur 16, constitué par exemple d'une tôle plane dont le bord avant est coudé en 17 est engagé dans des rainures horizontales 18 et 19 ménagées du côté interne dans les parois 5 et 7. Cet obturateur 16 ferme dans sa position d'engagement représentée au dessin l'ouverture inférieure de la trémie 13, tandis qu'en position de dégagement, il libère cette ouverture, de sorte que les granulés de matière plastique contenus dans la trémie 13 peuvent s'écouler dans la chambre 6.

D'autre part, le puits d'évacuation 14 peut être séparé de la chambre d'alimentation 6 par un second obturateur 20 également constitué par une tôle plane dont le bord avant est coudé en 21, cette tôle étant engagée dans des rainures 22 et 23 ménagées dans les parois 5 et 7 en dessous de la vis, mais au-dessus de l'ouverture 24 du puits d'évacuation.

Comme on le voit au dessin, lorsque le fond amovible 20 de la chambre d'alimentation 6 est en place et que l'obturateur 16 est ouvert, la chambre d'alimentation et la trémie 13 délimitent un espace qui peut être entièrement rempli par la matière plastique destinée à être traitée par l'extrudeuse. Cet espace a une forme symétrique par rapport à un plan vertical contenant l'axe de la vis et la distance entre n'importe laquelle des parois qui limitent latéralement la chambre d'alimentation et la surface sommitale du filet de la vis est en tout point d'un ordre de grandeur supérieur à la dimension des granulés. Cette distance sera, par exemple, de quelques centimètres, alors que la dimension des granulés est de quelques millimètres.

On peut dire aussi que la distance entre les parois de la chambre 6 et le sommet 29 du filet 3 de la vis sera par exemple au moins égale ou supérieure à la profondeur de la rainure de la vis ou encore à la hauteur du filet 3. On a remarqué que, dans ces conditions, les parois de la chambre d'alimentation n'influençaient pas le comportement des particules contenues dans cette chambre. L'entraînement des particules par la vis se fait d'une façon absolument régulière et symétrique sans exercer aucune poussée latérale sur la vis, indépendamment de sa position angulaire.

Ainsi, le cylindre de l'extrudeuse, peut comporter à l'amont de la chambre d'alimentation 6 un palier 25 guidant en rotation le bout d'arbre 26 que la vis présente à son extrémité amont. Ce palier servant avant tout à l'étanchéité, il n'a pas besoin d'absorber une grande poussée axiale s'exerçant sur la vis.

Le filetage de la vis 4 se prolonge dans la chambre d'alimentation 6 sans changement par rapport à la disposition que l'on trouve dans le cylindre 1. Ainsi, le sommet 29 du filet 3 est contenu dans la même surface cylindrique imaginaire que celle qui définit les spires de ce filet dans le cylindre 1. Comme on le voit à la fig. 1, le filet 3 s'étend dans le sens axial jusqu'à la paroi 7 dont l'ouverture destinée au passage de la vis est ajustée au diamètre de son noyau.

Le bâti 27 du dispositif d'entraînement enferme, de façon normale par exemple une poulie à gorges multiples permettant l'entraînement de la vis 4 à partir d'un moteur par le moyen de courroies ou, en variante, en engrenage.

La présence d'une chambre d'alimentation de grandes dimensions et de forme symétrique à l'amont de l'extrudeuse n'assure pas seulement l'élimination de la poussée latérale sur la vis, mais présente encore d'autres avantages. Ainsi, la disposition décrite permet grâce au fond amovible 20 communiquant avec le puits d'évacuation 14 et à l'obturateur 16 fermant la trémie 13, de réaliser plus facilement que jusqu'à maintenant, certaines opérations intervenant au cours du fonctionnement de l'extrudeuse. Ainsi, notamment, lorsqu'il est nécessaire de changer de matière ou de modifier certaines caractéristiques de la matière plastique introduite dans la machine par exemple de changer le colorant qu'elle contient, le moment auquel ce changement a lieu peut être déterminé avec grande précision, étant donné qu'on peut vider entièrement la chambre d'alimentation de la matière plastique qu'elle contient et remplacer celle-ci par la nouvelle matière plastique mélangée au nouveau colorant. De cette façon, le produit que l'on recueille dans la tête d'extrusion placée à la sortie de l'extrudeuse présente un changement de couleur à un endroit parfaitement déterminé.

**Revendications**

1. Extrudeuse pour matière plastique, comprenant une vis (4) avec un noyau s'étendant sur toute la longueur de la vis et avec un filetage (3) solidaire du noyau et s'étendant en saillie de ce dernier jusqu'à un diamètre prédéterminé, un cylindre (1) disposé horizontalement, dans lequel la vis est engagée et qui présente sur une partie de sa longueur un passage cylindrique (2) de dimensions ajustées avec un jeu prédéterminé au diamètre du filetage, une trémie (13) placée au dessus du cylindre à son extrémité amont, une ouverture étant prévue à la base de cette trémie pour permettre le passage de la matière plastique en particules de la trémie dans le cylindre, et une chambre d'alimentation (6) entourant une partie amont de la vis et mettant en communication le dit passage cylindrique avec la trémie, caractérisée en ce que, l'extrudeuse étant destinée à fonctionner en continu, la chambre d'alimentation est limitée par des parois fixes (5, 7, 8, 9, 10, 20) dont les faces internes comportent deux faces transversales (5, 7) opposées planes et verticales, de même surface, et entre ces deux faces transversales, des faces longitudinales parallèles à l'axe de la vis (8, 9, 10, 20) disposées symétriquement par rapport à un plan vertical contenant l'axe de la vis, et s'étendant à une distance du dit axe qui en tout point surpasse le rayon du filetage d'une valeur supérieure à la dimension des particules, les dites particules étant ainsi entraînés par le filetage au cours du mouvement de rotation de la vis dans des conditions indépendantes de leur position angulaire autour de la vis.

2. Extrudeuse selon la revendication 1, caractérisée en ce que le dit filetage comporte au moins dans une zone de la vis s'étendant dans la dite chambre d'alimentation (6) et dans une partie du passage cylindrique (2) un ou plusieurs filets hélicoïdaux.

3. Extrudeuse à vis selon la revendication 1, caractérisée en ce que la section de la chambre d'alimentation (6) est rectangulaire.

4. Extrudeuse à vis selon la revendication 3, destinée à homogénéiser une matière plastique en granules, caractérisée en ce que la distance entre les parois latérales de la chambre d'alimentation (6) et le filet de la vis est un multiple de la dimension des granules.

5. Extrudeuse à vis selon la revendication 1, caractérisée en ce qu'une plaque d'obturation (16) est disposée horizontalement entre la trémie (13) et la chambre d'alimentation (6), cette plaque d'obturation étant montée coulissante entre une position ouverte et une position fermée.

6. Extrudeuse à vis selon la revendication 1, caractérisée en ce que la chambre d'alimentation (6) comporte un fond amovible constitué par une plaque (20) coulissant entre une position fermée et une position ouverte.

7. Extrudeuse à vis selon la revendication 6, caractérisée en ce que la chambre d'alimentation (6) comporte à sa partie inférieure un puits d'évacuation (14), le fond amovible constituant une séparation entre la chambre d'alimentation et le puits d'évacuation.

8. Extrudeuse à vis selon la revendication 1, caractérisée en ce que le cylindre (1) est équipé d'un seul palier (25) situé à l'amont de la chambre d'alimentation et guidant un bout d'arbre (26) prolongeant la vis à son extrémité amont.

**Patentansprüche**

1. Kunststoffextruder, mit einer Schnecke (4), die einen sich auf ihrer ganzen Länge erstreckenden Kern und eine Schneckenrippe (3) hat, die an diesem Kern festliegt und aus ihm bis zu einem vorbestimmten Durchmesser herausragt, ferner mit einem horizontal angeordneten Zylinder (1), in welchem die Schnecke angeordnet ist, und welcher auf einem Teil seiner Länge einen zylindrischen Durchlaß (2) hat, dessen Abmessungen mit einem vorbestimmten Spiel an den Durchmesser der Schneckenrippe angepaßt sind, ferner mit einem Trichter (13), der auf dem Zylinder an dessen Einlaßende angeordnet ist, wobei an der Basis dieses Trichters eine Öffnung vorhanden ist für den Durchlaß des aus körnigem Material vorliegenden Kunststoffes in den Zylinder, und mit einer Einspeisekammer (6), die einen stromaufwärtigen Teil der Schnecke umgibt und den besagten zylindrischen Durchlaß mit dem Trichter verbindet, dadurch gekennzeichnet, daß bei für den kontinuierlichen Betrieb bestimmtem Extruder, die Einspeisekammer durch feststehende Wandungen (5, 7, 8, 9, 10, 20) begrenzt ist, deren Innenflächen zwei einander gegenüberliegende Querflächen (5, 7) aufweisen, die eben und vertikal sind und den gleichen Flächeninhalt haben, und zwischen diesen beiden Querflächen mehrere Längsflächen (8, 9, 10, 20) aufweisen, die zur Achse der Schnecke parallel und in bezug auf eine die Schneckenachse enthaltende Vertikalebene symmetrisch angeordnet sind und sich in einem Abstand von dieser Achse erstrecken, der an jeder Stelle den Radius der Schneckenrippe um einen Betrag übersteigt, der größer ist als die Abmessung der Kunststoffkörner, derart, daß diese Körner durch die Schneckenrippe mitgenommen werden bei der Drehung der Schnecke unter Bedingungen, die unabhängig sind von ihrer Winkellage um die Schnecke.

2. Kunststoffextruder nach Anspruch 1, da-

durch gekennzeichnet, daß die besagte Schneckenrippe mindestens in einer Zone der Schnecke, die sich in der besagten Speisekammer (6) und in einem Teil des zylindrischen Durchlasses (2) erstreckt, einen oder mehrere schraubenförmige Schneckengänge aufweist.

3. Kunststoffextruder nach Anspruch 1, dadurch gekennzeichnet, daß der Querschnitt der Speisekammer (6) rechteckförmig ist.

4. Kunststoffextruder nach Anspruch 3, bestimmt zum Homogenisieren eines in Körnern vorliegenden Kunststoffes, dadurch gekennzeichnet, daß der Abstand zwischen den seitlichen Wandungen der Speisekammer (6) und der Schneckenrippe ein Mehrfaches der Abmessungen der Körner beträgt.

5. Kunststoffextruder nach Anspruch 1, dadurch gekennzeichnet, daß eine Absperrplatte (16) horizontal zwischen dem Trichter (13) und der Speisekammer (6) gelegen ist, wobei diese Absperrplatte von einer Öffnungslage in eine Schließlage und umgekehrt, verschiebbar ist.

6. Kunststoffextruder nach Anspruch 1, dadurch gekennzeichnet, daß die Speisekammer (6) einen abnehmbaren Boden hat, der aus einer Platte (20) besteht, die von einer Schließ- in eine Öffnungslage, und umgekehrt, verschiebbar ist.

7. Kunststoffextruder nach Anspruch 6, dadurch gekennzeichnet, daß die Speisekammer (6) an ihrem unteren Teil einen Ablaßteil (14) aufweist, wobei der wegnehmbare Boden eine Trennwand zwischen der Speisekammer und dem Ablaßteil bildet.

8. Kunststoffextruder nach Anspruch 1, dadurch gekennzeichnet, daß der Zylinder (1) mit einem einzigen Lager (25) ausgerüstet ist, das sich am stromaufwärtigen Ende der Speisekammer befindet und ein Wellenende (26) führt, das eine Verlängerung der Schnecke an ihrem stromaufwärtigen Ende bildet.

**Claims**

1. Extruder for plastics material, comprising a screw (4) with a core extending over the whole length of the screw and with a thread (3) integral with the core and projecting from the latter to a predetermined diameter, a cylinder (1) disposed horizontally, in which the screw is inserted and which exhibits over part of its length a cylindrical passage (2) of a size fitted with a predetermined amount of play to the diameter of the thread, a hopper (13) placed above the cylinder at its upstream end, an opening being provided at the base of this hopper for allowing the passage of the plastics material in particles from the hopper into the cylinder, and a feed chamber (6) surrounding an upstream portion of the screw and putting the said cylindrical passage in communication with the hopper, characterized in that, the extruder being intended to operate continuously, the feed chamber is bounded by fixed walls (5, 7, 8, 9, 10, 20), the inside faces of which include two plane, vertical, opposite transverse faces (5, 7) of the same surface and, between these two transverse faces, longitudinal faces parallel to the axis of the screw (8, 9, 10, 20), disposed symmetrically relative to a vertical plane containing the axis of the screw and situated at a distance from the said axis which at all points exceeds the radius of the thread by a value greater than the size of the particles, the said particles thus being carried along by the thread in the course of the rotational movement of the screw under conditions independent of their angular position about the screw.

2. Extruder according to claim 1, characterized in that the said thread includes one or more spiral fillets in at least one zone of the screw extending into the said feed chamber (6) and into part of the cylindrical passage (2).

3. Screw extruder according to claim 1, characterized in that the cross-section of the feed chamber (6) is rectangular.

4. Screw extruder according to claim 3, intended for homogenizing a plastics material in pellets, characterized in that the distance between the side walls of the feed chamber (6) and the fillet of the screw is a multiple of the size of the pellets.

5. Screw extruder according to claim 1, characterized in that a closure plate (16) is disposed horizontally between the hopper (13) and the feed chamber (6), this closure plate being mounted slidingly between an open position and a closed position.

6. Screw extruder according to claim 1, characterized in that the feed chamber (6) comprises a removable bottom constituted by a plate (20) sliding between a closed position and an open position.

7. Screw extruder according to claim 6, characterized in that the feed chamber (6) comprises at its lower part a discharge well (14), the removable bottom constituting a separation between the feed chamber and the discharge well.

8. Screw extruder according to claim 1, characterized in that the cylinder (1) is equipped with a single bearing (25) situated upstream from the feed chamber and guiding a shaft end (26) extending the screw at its upstream end.

FIG. 1

FIG. 2

0 079 656